# EUROPÄISCHE PATENTSCHRIFT

(11) **EP 4 220 077 B1**
(45) Veröffentlichungstag und Bekanntmachung des Hinweises auf die Patenterteilung: **30.07.2025**
(21) Anmeldenummer: 23153843.0
(22) Anmeldetag: 30.01.2023
(51) Int. Cl.: G01B 21/04, G06T 7/80

(54) **KALIBRIERSYSTEM ZUM KALIBRIEREN EINES KAMERASYSTEMS UND ZUGEHÖRIGES KALIBRIERSYSTEM**
CALIBRATION SYSTEM FOR CALIBRATING A CAMERA SYSTEM AND ASSOCIATED CALIBRATION SYSTEM
SYSTÈME D'ÉTALONNAGE POUR ÉTALONNER UN SYSTÈME DE CAMÉRA ET SYSTÈME D'ÉTALONNAGE ASSOCIÉ

(30) Priorität: 01.02.2022 DE 102022201012
(43) Veröffentlichungstag der Anmeldung: 02.08.2023
(73) Patentinhaber: Robert Bosch GmbH, 70442 Stuttgart (DE)
(72) Erfinder: Knorr, Moritz Michael, 31139 Hildesheim (DE)

(56) Entgegenhaltungen:
- EP-A1- 3 550 259
- US-A1- 2019 364 206
- US-A1- 2021 291 376

## Beschreibung

### Stand der Technik

Die vorliegende Erfindung betrifft einen Kalibrierkörper zum Kalibrieren eines Kamerasystems.

Aktuelle Kalibrierkörper, wie beispielsweise ein Checkerboard-Kalibrierkörper (Schachbrett-Kalibrierkörper), werden oftmals zur Kalibrierung intrinsischer oder extrinsischer Kameraparameter verwendet. Bei solchen Kalibrierungen treten jedoch oftmals Fälle auf, in denen die Orientierung des Kalibrierkörpers gegenüber der zu kalibrierenden Kamera nicht genau ermittelt werden kann. Die Orientierung betrifft dabei insbesondere die zwei Winkel, welche die horizontale und vertikale Verkippung und somit die Ebenennormale des Checkerboard-Kalibrierkörpers beschreiben.

Das Dokument US 2019/364206 A1 offenbart en System zur Kalibrierung einer Kamera.

Das Dokument EP 3 550 259 A1 offenbart einen Marker zur Abschätzung der Pose eines Objekts.

### Offenbarung der Erfindung

Der erfindungsgemäße Kalibrierkörper zum Kalibrieren eines Kamerasystems umfasst ein optisches Kalibrierelement, welches für eine Kalibrierung extrinsischer und/oder intrinsischer Parameter des Kamerasystems geeignet ist, und einen optischen Lageindikator, welcher für ein Erfassen einer relativen Orientierung des optischen Lageindikators gegenüber dem Kamerasystem durch das Kamerasystem geeignet ist, wobei Kalibrierelement in einer vordefinierten relativen Lage gegenüber dem optischen Lageindikator angeordnet ist.

Das erfindungsgemäße Kalibriersystem umfasst den erfindungsgemäßen Kalibrierkörper und das zu kalibrierende Kamerasystem. Das Kalibriersystem umfasst ferner eine mit dem Kamerasystem gekoppelte Recheneinheit, welche dazu eingerichtet ist, ein von dem Kamerasystem erfasstes Bild des Kalibrierkörpers zu empfangen, eine relative Orientierung des optischen Lageindikators gegenüber dem Kamerasystem basierend auf dem in dem Bild erfassten Lageindikator zu ermitteln und eine Kalibrierung extrinsischer und/oder intrinsischer Parameter des Kamerasystems basierend auf dem in dem Bild dargestellten optischen Kalibrierelement und der ermittelten relativen Orientierung des optischen Lageindikators gegenüber dem Kamerasystem auszuführen.

So die relative Orientierung des optischen Lageindikators gegenüber dem Kamerasystem nicht der relativen Orientierung des optischen Kalibrierelements gegenüber dem Kamerasystem entspricht, so wird die relative Orientierung des optischen Kalibrierelements gegenüber dem Kamerasystem basierend auf einem vorgegebenen Zusammenhang zwischen der relativen Orientierung des optischen Lageindikators gegenüber dem optischen Lageindikator ermittelt.

Der Kalibrierkörper umfasst ein optisches Kalibrierelement, welches für eine Kalibrierung extrinsischer und/oder intrinsischer Parameter des Kamerasystems geeignet ist. Das optische Kalibrierelement ist dabei insbesondere ein passives Kalibrierelement. Das bedeutet, dass das optische Kalibrierelement keine aktiven Komponenten umfasst. Das optische Kalibrierelement weist jedoch Eigenschaften auf, welche für eine Kalibrierung extrinsischer und/oder intrinsischer Parameter des Kamerasystems geeignet sind. Extrinsische Parameter sind dabei insbesondere solche Parameter, welche insbesondere eine Anordnung oder Ausrichtung des Kamerasystems, insbesondere eine Ausrichtung oder Anordnung mehrerer Kameras eines Kamerasystems definieren. Intrinsische Parameter sind insbesondere solche Parameter, welche eine Eigenschaft einer Kamera an sich beschreiben, beispielsweise eine Zuordnung einzelner Pixel eines Bildsensors einer Kamera zu einer optischen Achse der Kamera.

Der optische Lageindikator ist für ein Erfassen einer relativen Orientierung des optischen Lageindikators gegenüber dem Kamerasystem durch das Kamerasystem geeignet. Das bedeutet, dass der optische Lageindikator derart gestaltet ist, dass aus einem von dem Kamerasystem erfassten Bild des optischen Lageindikators auf die relative Orientierung des Kamerasystems gegenüber dem optischen Lageindikator geschlossen werden kann. Der optische Lageindikator ist dabei insbesondere derart gestaltet, dass die relative Orientierung unabhängig von den zu kalibrierenden extrinsischen und/oder intrinsischen Parametern des Kamerasystems ermöglicht ist. Somit kann die relative Orientierung auch dann korrekt erfasst werden, wenn die Kalibrierung der Parameter des Kamerasystems noch aussteht.

Das optische Kalibrierelement ist in einer vordefinierten relativen Lage gegenüber dem optischen Lageindikator angeordnet. Es kann somit aus der ermittelten relativen Orientierung des optischen Lageindikators gegenüber dem Kamerasystem auch auf die relative Orientierung des Kamerasystems gegenüber dem optischen Kalibrierelement geschlossen werden.

Hierbei umfasst der optische Lageindikator eine Lasereinheit mit einem diffraktiven optischen Element, welche ausgebildet ist, ein Muster unabhängig von einer transversalen Verschiebung des Kamerasystems gegenüber dem optischen Lageindikator darzustellen. Solche Lageindikatoren, welche auf einer Lasereinheit und einem diffraktiven optischen Element basieren, sind aus dem Stand der Technik bekannt. Die entsprechende Nutzung in einem Kalibrierkörper ist jedoch besonders vorteilhaft. Ein solcher optischer Lageindikator mit einer Lasereinheit und einem diffraktiven optischen Element ist beispielsweise unter dem Namen GEOCAL bekannt. Dabei wird durch die Lasereinheit ein Laserstrahl auf ein diffraktives optisches Element gerichtet. Durch das diffraktive optische Element wird ein Muster angezeigt, welches solche Eigenschaften aufweist, als ob dieses im Unendlichen liegen würde. Dies führt dazu, dass eine transversale Verschiebung des Kamerasystems gegenüber dem optischen Lageindikator nicht zu einer Veränderung des dargestellten Musters aus Sicht des Kamerasystems führt. Lediglich ein Verändern der Orientierung und somit der Ausrichtung des Kamerasystems gegenüber dem optischen Lageindikator führt zu einer Veränderung dieses Musters aus Sicht des Kamerasystems. Somit wird durch den optischen Lageindikator ein Erfassen einer Orientierung des optischen Lageindikators gegenüber dem Kamerasystem abhängig von dem erfassten Muster durch das Kamerasystem ermöglicht.

Es wird somit ein Kalibrierkörper geschaffen, welcher aus zumindest zwei Komponenten besteht. Durch diese Komponenten können unterschiedliche Parameter ermittelt werden, welche für eine Kalibrierung des Kamerasystems benötigt können. Durch die Verwendung des optischen Lageindikators kann erreicht werden, dass keine Abschätzung der relativen Orientierung des optischen Lageindikators gegenüber dem Kamerasystem basierend auf dem optischen Kalibrierelement ausgeführt werden muss. Das optische Kalibrierelement kann daher für die Kalibrierung des Kamerasystems optimiert werden. Dies ist auch daher vorteilhaft, da das optische Kalibrierelement bevorzugt ein musterbasiertes Kalibrierelement ist, welches lediglich eine relativ ungenaue Bestimmung der relativen Orientierung des Kamerasystems gegenüber dem Kalibrierkörper ermöglicht. Es wird somit ein Kalibrierkörper geschaffen, welcher unabhängig von einer vordefinierten Ausrichtung eines Kamerasystems gegenüber dem Kalibrierkörper genutzt werden kann. Dadurch werden z. B. Kalibrierungen von Kamerasystemen erleichtert, da der erfindungsgemäße Kalibrierkörper lediglich in ein Sichtfeld des Kamerasystems gebracht werden muss, um die Kalibrierung auszuführen. Somit können beispielsweise auch mehrere Kamerasysteme gleichzeitig kalibriert werden.

Es erfolgt somit eine Verbesserung bestehender Kalibrierverfahren und Algorithmen in Bezug auf deren Genauigkeit, Robustheit und Zeitbedarf. Die direkte optische Bestimmung der Orientierung und/oder Lage des Kamerasystems gegenüber dem Kalibrierkörper basierend auf dem optischen Lageindikator macht die Kalibrierung stabiler und effizienter, da weniger Aufnahmen benötigt werden, weniger Parameterverkopplungen auftreten und essentiell weniger Parameter geschätzt werden müssen. Da die Bestimmung rein optisch durch das zu kalibrierende Kamerasystem erfolgt, lässt sich diese erfindungsgemäße Verwendung eines Kalibrierkörpers auch mit bestehenden optischen Kalibrierelementen kombinieren.

Das Kamerasystem ist insbesondere ein Stereokamerasystem oder ein mehrere Kameras umfassendes Kamerasystem. Dabei wird insbesondere auch eine relative Lage der Kameras des Kamerasystems zueinander im Rahmen der extrinsischen Parameter des Kamerasystems kalibriert. Gerade bei der Verwendung mehrerer Kameras in einem Kamerasystem ist die Lage zumindest einer Kamera des Kamerasystems gegenüber dem Kalibrierkörper nicht bekannt und muss basierend auf dem Kalibrierkörper ermittelt werden. Hierzu wird durch den optischen Lageindikator erreicht, dass keine Abschätzung der relativen Orientierung einer der Kameras ausgeführt werden muss, sondern diese für beide Kameras mittels des optischen Lageindikators ermittelt werden kann. Bei dem Ermitteln einer Lage des Kamerasystems gegenüber dem Kalibrierkörper basierend auf dem in dem Bild erfassten Lageindikator wird zumindest eine Lage einer Kamera des Kamerasystems gegenüber dem Kalibrierkörper ermittelt, bevorzugt jedoch die Lage zweier Kameras gegenüber dem Kalibrierkörper basierend auf dem von den jeweiligen Kameras erfassten Bild des Lageindikators ermittelt. Eine Kalibrierung weiterer extrinsischer und/oder intrinsischer Parameter des Kamerasystems basiert auf dem in dem Bild oder in den Bildern dargestellten optischen Kalibrierelement und der ermittelten Lage.

Ist die Lage des optischen Kalibrierelements in Bezug auf den Lageindikator nicht bekannt, beispielsweise initial nach der Herstellung, so lässt sich die relative Lage auf Basis von Beobachtungen des optischen Kalibrierelements und des Lageindikators durch ein bereits kalibriertes Ein- oder Mehrkamerasystem bestimmen.

Die Unteransprüche zeigen bevorzugte Weiterbildungen der Erfindung.

Bevorzugt umfasst der optische Lageindikator eine inverse Kamera, welche dem Kamerasystem das Erfassen der relativen Orientierung durch ein Ablesen eines orientierungsabhängig ablesbaren Indikators ermöglicht. Eine inverse Kamera ist dabei eine Vorrichtung, die derart gestaltet ist, dass bei deren Betrachtung abhängig von einer Orientierung der inversen Kamera gegenüber einem Betrachter ein unterschiedlicher Indikator sichtbar ist. Durch den jeweils ablesbaren Indikator ist die relative Orientierung eines Betrachters gegenüber der inversen Kamera beschrieben.

Die inverse Kamera weist dazu bevorzugt eine erste Ebene und eine zweite Ebene auf, wobei die erste Ebene einen Betrachtungspunkt der zweiten Ebene aus Sicht des Kamerasystems definiert, und ein auf dem Betrachtungspunkt in der zweiten Ebene gelegener Indikator die relative Orientierung des optischen Lageindikators gegenüber dem Kamerasystem beschreibt. So ist in der zweiten Ebene insbesondere ein Muster mit einer Vielzahl ablesbarer Indikatoren angeordnet, wo bei jeder der Indikatoren einer relativen Orientierung des Optischen Lageindikators gegenüber dem Kamerasystem zugeordnet ist. In der ersten Ebene ist bevorzugt ein Punkt definiert, über den die zweite Ebene zu betrachten ist. Wird die inverse Kamera gegenüber einem Betrachter gekippt, so kommt es zu einer Verschiebung dieses Punktes gegenüber der zweiten Ebene. Es wird somit ein jeweils unterschiedlicher Betrachtungspunkt in der zweiten Ebene aus Sicht des Betrachters, hier des Kamerasystems, gekennzeichnet. Dieser Betrachtungspunkt definiert einen bestimmten Indikator in der zweiten Ebene und beschreibt somit die relative Orientierung des optischen Lageindikators gegenüber dem Kamerasystem. Es kann somit ermittelt werden, aus welchem Winkel der Kalibrierkörper von einer Kamera des Kamerasystems betrachtet wird. Das bedeutet, dass ein Winkel ermittelt werden kann, in dem ein Sichtstrahl einer Kamera auf die inverse Kamera fällt. Aus diesem Winkel kann wiederum auf die Orientierung des optischen Lageindikators gegenüber dem Kamerasystem geschlossen werden. Auch ist es somit möglich, dass ein Winkel zwischen zwei Sichtstrahlen zweier Kameras des Kamerasystems ermittelt wird so das Kamerasystem mehrere Kameras umfasst.

Weiter bevorzugt umfasst der Lageindikator zwei in einem Winkel zueinander stehende optische Winkelanzeigen, welche jeweils einen Winkel einer Verkippung des optische Lageindikator gegenüber dem Kamerasystem in einer zugehörigen Ebene beschreiben und dem Kamerasystem das Erfassen der relativen Orientierung durch ein Ablesen der beiden Winkel ermöglicht. Eine optische Winkelanzeige weist beispielsweise mehrere optische Elemente auf, welche in einer Reihe angeordnet sind. Die einzelnen optischen Elemente sind dabei beispielsweise mit Blenden ausgestattet, welche diese lediglich aus einer bestimmten Blickrichtung sichtbar machen. Die Blenden unterschiedlicher optischer Elemente sind dazu in unterschiedliche Richtungen ausgerichtet. Somit wird beispielsweise abhängig von einem Betrachtungswinkel ein bestimmtes optisches Element des optischen Lageindikators sichtbar. Durch die Verwendung zweier optischer Winkelanzeigen, welche in einem Winkel zueinander stehen, kann die relative Orientierung durch ein Ablesen zweier Winkel basierend auf den beiden optischen Winkelanzeigen erfolgen.

Auch ist vorteilhaft, wenn das optische Kalibrierelement ein Muster auf einer planaren Oberfläche aufweist. Das Muster ist insbesondere ein Schachbrettmuster. Solche optischen Kalibrierelemente, welche ein Muster auf einer planaren Oberfläche aufweisen, sind besonders vorteilhaft, da diese zwar eine einfache Kalibrierung extrinsischer und/oder intrinsischer Parameter des Kamerasystems ermöglichen. Allerdings ermöglichen diese optischen Kalibrierelemente lediglich eine schlechte Abschätzung einer relativen Orientierung des Kalibrierelements gegenüber dem Kamerasystem. Dieses Defizit wird durch den optischen Lageindikator ausgeglichen. Es kann somit in Summe eine besonders genaue Kalibrierung erfolgen.

Auch ist es vorteilhaft, wenn das optische Kalibrierelement und der optische Lageindikator in einer gemeinsamen Ebene angeordnet sind. Somit wird mit dem Erfassen einer relativen Orientierung des optischen Lageindikators gegenüber dem Kamerasystem zugleich auch die relative Orientierung des optischen Kalibrierelements gegenüber dem Kamerasystem ermittelt. Weitere Umrechnungen sind somit nicht mehr nötig.

Auch ist es vorteilhaft, wenn die Kalibrierung extrinsischer und/oder intrinsischer Parameter des Kamerasystems basierend auf der ermittelten relativen Orientierung des optischen Lageindikators gegenüber dem Kamerasystem erfolgt, wobei basierend auf der ermittelten relativen Orientierung des optischen Lageindikators gegenüber dem Kamerasystem ein senkrecht zu dem optischen Kalibrierelement stehender Normalenvektor ermittelt wird. Durch den Normalenvektor wird die Ausrichtung des optischen Kalibrierelements eindeutig beschrieben und Verzerrungen eines auf dem optischen Kalibrierelement angebrachten Musters somit genau definiert. Somit können basierend auf dem Normalenvektor die für die Kalibrierung notwendigen Parameter errechnet werden, durch welche beispielsweise Verzerrungen in einer Darstellung des optischen Kalibrierelements in dem Bild des Kamerasystems korrigiert werden.

Ebenso vorteilhaft ist ein Verwenden eines erfindungsgemäßen Kalibrierkörpers für eine Kalibrierung extrinsischer und/oder intrinsischer Parameter eines Kamerasystems, wobei eine relative Orientierung des optischen Lageindikators gegenüber dem Kamerasystem basierend auf dem in dem Bild erfassten Lageindikator ermittelt wird, und eine Kalibrierung der extrinsischen und/oder intrinsischen Parameter des Kamerasystems basierend auf dem optischen Kalibrierelement und der ermittelten relativen Orientierung des optischen Lageindikators gegenüber dem Kamerasystem ausgeführt wird.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine Darstellung eines beispielhaften erfindungsgemäßen Kalibrierkörpers mit einem davor angeordneten Kamerasystem,
- Figur 2: eine beispielhafte Darstellung eines optischen Lageindikators, welcher eine inverse Kamera umfasst,
- Figur 3: eine beispielhafte Darstellung eines optischen Lageindikators, welcher eine Lasereinheit mit einem diffraktiven optischen Element umfasst, und
- Figuren 4 und 5: eine beispielhafte Darstellung eines optischen Lageindikators, welcher zwei zueinander in einem Winkel stehende optische Winkelanzeigen umfasst.

### Ausführungsformen der Erfindung:

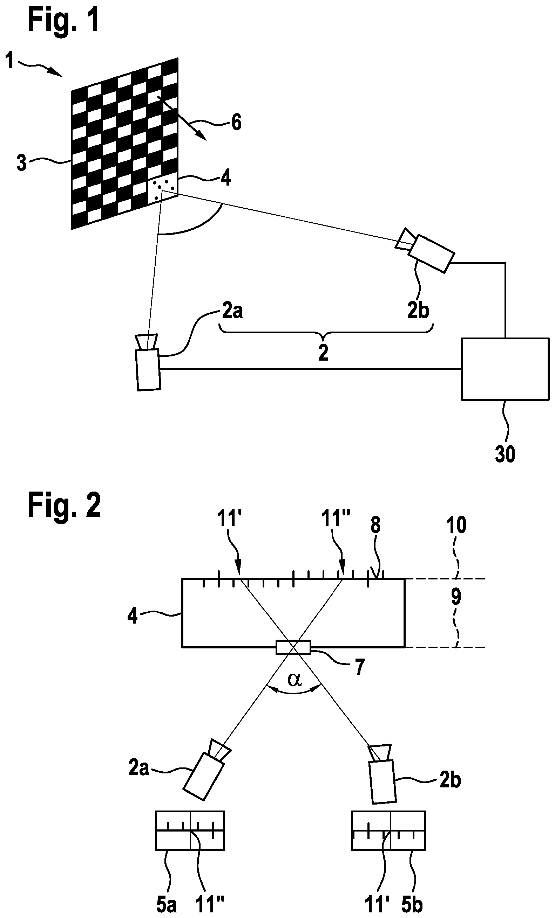

Figur 1 zeigt einen Kalibrierkörper 1 mit einem dazugehörigen Kamerasystem 2 gemäß einer Ausführungsform der Erfindung. Der Kalibrierkörper 1 ist ein zweiteiliger Kalibrierkörper. So umfasst der Kalibrierkörper 1 ein optisches Kalibrierelement 3 und einen optischen Lageindikator 4.

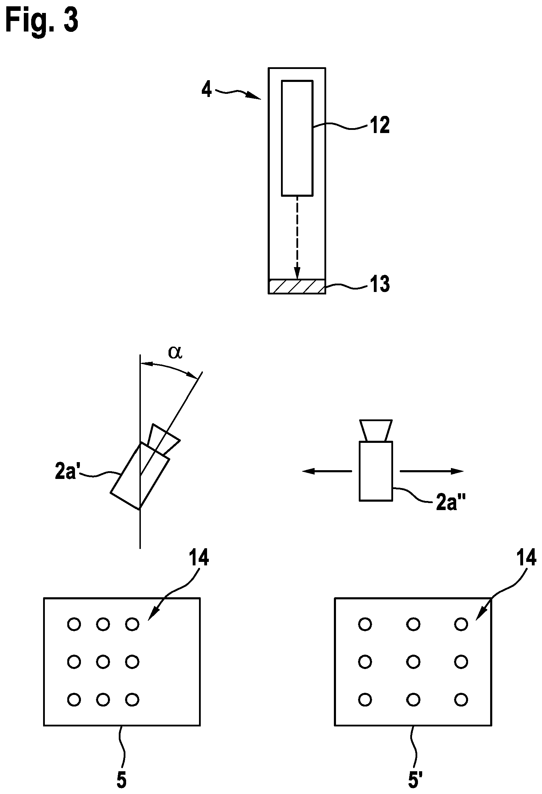

Der optische Lageindikator 4 wird im Weiteren mit Bezug auf die Figuren 2 bis 5 im Detail beschrieben, wobei der erfindungsgemäße Kalibrierkörper einen Lageindikator gemäß Figur 3 enthält. Es wird jedoch darauf hingewiesen, dass auch mehrere unterschiedliche optische Lageindikatoren 4 an dem Kalibrierkörper 1 angeordnet sein können.

Das Kamerasystem 2 umfasst eine erste Kamera 2a und eine zweite Kamera 2b.

Um eine Kalibrierung des Kamerasystems 2 auszuführen, erfolgt eine Kalibrierung extrinsischer und intrinsischer Parameter des Kamerasystems. Die extrinsischen Parameter des Kamerasystems 2 beschreiben dabei eine relative Lage und Ausrichtung der ersten Kamera 2a gegenüber der zweiten Kamera 2b. Bei der Kalibrierung intrinsischer Parameter des Kamerasystems 2 erfolgt eine Kalibrierung einer Optik der ersten Kamera 2a und der zweiten Kamera 2b. So wird beispielsweise ermittelt, welches Pixel eines Sensors der ersten oder zweiten Kamera 2a, 2b auf einer optischen Achse der jeweiligen Kamera liegt.

Das optische Kalibrierelement 3 des Kalibrierkörpers 1 ist für eine solche Kalibrierung extrinsischer und intrinsischer Parameter des Kamerasystems 2 geeignet. Das optische Kalibrierelement 3 ist in der in Figur 1 gezeigten Ausführungsform durch ein Muster auf einer planaren Oberfläche gegeben, wobei das Muster ein Schachbrettmuster ist. Auch alternative Muster können für eine extrinsische und/oder intrinsische Kalibrierung des Kamerasystems 2 geeignet sein.

Es ist aus Figur 1 ferner ersichtlich, dass der optische Lageindikator 4 in einer Ecke des Kalibrierkörpers 1 angeordnet ist. Der optische Lageindikator 4 ist dabei mit dem optischen Kalibrierelement 3 in einer gemeinsamen Ebene angeordnet. Das optische Kalibrierelement 3 ist somit zugleich auch in einer vordefinierten relativen Lage gegenüber dem optischen Lageindikator 4 angeordnet. Die Lage beschreibt die Orientierung des optischen Lageindikators 4 gegenüber dem optischen Kalibrierelement 3. Hinsichtlich der Ausrichtung des optischen Kalibrierelements 3 gegenüber dem optischen Lageindikator 4 sind auch alternative Anordnungen möglich. So könnte beispielsweise der optische Lageindikator 4 eine unterschiedliche Ausrichtung gegenüber dem optischen Kalibrierelement 3 aufweisen. Insofern diese relative Lage dem Kamerasystem 2 bekannt ist, können solche Unterschiede in der Ausrichtung zwischen dem optischen Kalibrierelement 3 und dem optischen Lageindikator 4 bei einer Kalibrierung berücksichtigt werden.

Soll eine Kalibrierung der Kameraparameter, also der extrinsischen und/oder intrinsischen Parameter des Kamerasystems 2 erfolgen, so wäre es ohne den optischen Lageindikator 4 notwendig, dass von dem Kamerasystem 2 eine relative Orientierung des optischen Kalibrierelements 3 geschätzt wird. Dies erweist sich jedoch oftmals als schwierig oder ungenau, so kein optischer Lageindikator 4 verfügbar ist. So wird das beispielhaft in Figur 1 dargestellte Schachbrettmuster abhängig von dessen Orientierung gegenüber dem Kamerasystem 2 perspektivisch verzerrt dargestellt. Theoretisch ließe sich aus dieser perspektivischen Verzerrung auf die Orientierung des Kalibrierkörpers 1 zu dem Kamerasystem 2 schließen. Dies ist jedoch mit einer Ungenauigkeit behaftet, da diese Verzerrungen oftmals nur sehr gering sind und mit einer Kameraauflösung nicht hinreichend genau erfasst wird. Geringe Verzerrungen werden nicht hinreichend aufgelöst und eine genaue Kalibrierung ist nicht möglich. Auch ist dabei zu berücksichtigen, dass die Kameras 2a, 2b des Kamerasystems 2 zu diesem Zeitpunkt noch unkalibriert sind und somit mangels hinreichender Kalibrierung eine weitere Ungenauigkeit auftreten kann.

Der optische Lageindikator 4 ist für ein Erfassen einer relativen Orientierung des optischen Lageindikators 4 gegenüber dem Kamerasystem 2 durch das Kamerasystem 2 geeignet. Es kann somit eine Lage des optischen Lageindikators 4 durch das Kamerasystem 2 erfasst werden. Dabei ist der optische Lageindikator 4 derart gestaltet, dass das Erfassen der relativen Orientierung des optischen Lageindikators 4, unabhängig von den zu kalibrierenden extrinsischen und/oder intrinsischen Parametern des Kamerasystems 2 ermöglicht wird. Die relative Orientierung des optischen Lageindikators 4 gegenüber dem Kamerasystem 2 kann dabei genauer erfasst werden als bei einer Abschätzung mittels des optischen Kalibrierelements 3, da der optische Lageindikator 4 für das Erfassen der Lage optimiert sein kann, da dieser nicht alleinig alle Informationen für das Kalibrieren des Kamerasystems 2 bereitstellt.

Durch den optischen Lageindikator 4 wird es beispielsweise ermöglicht, dass durch das Kamerasystem 2 ein Normalenvektor 6 errechnet werden kann, welcher senkrecht zu einer Oberfläche des optischen Kalibrierelements 3 steht. Der Normalenvektor wird damit dabei in Bezug auf ein relativ zu dem Kamerasystem 2 definierten Koordinatensystem bestimmt. Naturgemäß steht der Normalenvektor 6 senkrecht zu dem optischen Kalibrierelement 3 insbesondere senkrecht auf der planaren Oberfläche des Kalibrierelements 3. Ein solcher Normalenvektor wird typischerweise bei der Kalibrierung von Kameraparametern eines Kamerasystems 2 verwendet. Die detaillierte Verwendung wird daher hier nicht im Detail beschrieben. Dennoch wird darauf hingewiesen, dass die Qualität der Kalibrierung der Kameraparameter des Kamerasystems 2 dadurch verbessert werden kann, dass dieser Normalenvektor 6 berechnet wird und nicht geschätzt werden muss. Der Normalenvektor 6 wird dabei bevorzugt ausschließlich basierend auf dem durch das Kamerasystem 2 erfassten optischen Lageindikator 4 ermittelt. Somit kann die Kalibrierung des Kamerasystems 2 dadurch verbessert werden, dass die relative Orientierung des optischen Kalibrierelements 3 nicht geschätzt werden muss, wobei solche Schätzungen typischerweise basierend auf unkalibrierten Kamerasystemen erfolgen müssen.

Dadurch, dass der optische Lageindikator 4 ein Erfassen der relativen Orientierung des optischen Lageindikators 4 basierend auf einer Abbildung des optischen Lageindikators 4 in einem Bild des Kamerasystems 2 ermöglicht, wird es ferner ermöglicht, dass eine unbeschränkte Anzahl von Kamerasystemen 2 zugleich kalibriert werden können, da beispielsweise keine Kommunikation zwischen dem Kalibrierkörper 1 und dem Kamerasystem 2 etabliert werden muss und da das Kamerasystem nicht mit einer bestimmten Orientierung gegenüber dem Kalibrierkörper 1 angeordnet sein muss.

Figur 2 zeigt einen optischen Lageindikator 4, welcher im Kalibrierkörper zusätzlich zu dem in Figur 3 gezeigten Lageindikator angebracht sein kann.

Der optische Lageindikator 4 umfasst dabei eine inverse Kamera, welche dem Kamerasystem 2 das Erfassen der relativen Orientierung durch ein Ablesen eines orientierungsabhängigen ablesbaren Indikators ermöglicht. Dazu weist der optische Lageindikator 4 eine erste Ebene 9 und eine zweite Ebene 10 auf. Die erste Ebene 9 und die zweite Ebene 10 sind parallel zueinander liegende Ebenen. In der ersten Ebene 9 ist eine Linse 7 angeordnet. In der zweiten Ebene 10 ist eine Indikatoroberfläche 8 angeordnet, auf welcher eine Vielzahl zueinander unterschiedlicher Indikatoren angeordnet sind. Durch die Linse 7 ist ein Betrachtungspunkt 11 der zweiten Ebene aus Sicht des Kamerasystems 2 definiert. Das bedeutet, wenn die Linse 7 des optischen Lageindikators 4 und somit der inversen Kamera betrachtet wird, so wird von der jeweiligen Kamera 2a, 2b abhängig von der Orientierung der inversen Kamera gegenüber dem Kamerasystem 2 ein bestimmter Indikator der Indikatoroberfläche 8 erkannt.

Bei dem in Figur 2 gezeigten Beispiel ist für die erste Kamera 2a durch die Linse 7 ein erster Betrachtungspunkt 11' und für die zweite Kamera 2b ist durch die Linse 7 ein zweiter Betrachtungspunkt 11' gegeben. Der erste Betrachtungspunkt 11' wird in einem Bild 5a der ersten Kamera 2a sichtbar. Der zweite Betrachtungspunkt 11" wird in einem Bild 5b der zweiten Kamera 2b sichtbar. Es ist jeder Indikator auf der Indikatoroberfläche 8 einer bestimmten Position der betrachtenden Kamera 2a, 2b zugehörig. Diese Relation kann vorab definiert sein, wodurch es dem Kamerasystem 2 ermöglicht wird, durch Ablesen des bestimmten Indikators 11 auf die relative Position zu dem optischen Lageindikator 4 zu schließen. Aus der relativen Position kann wiederum auf die relative Orientierung geschlossen werden. Der in der zweiten Ebene 10 gelegene Indikator wird somit durch den Betrachtungspunkt definiert und beschreibt die relative Orientierung des optischen Lageindikators 4 gegenüber dem Kamerasystem 2.

Es ist ersichtlich, dass durch die erste Kamera 2a und die zweite Kamera 2b jeweils ein unterschiedliches Kamerabild 5a, 5b erfasst wird, auf welchem ein unterschiedlicher Indikator der Indikatoroberfläche 8 erkenntlich ist. Der erfasste Indikator kann dabei jedoch auch abhängige von der Position des Kamerasystems 2 sein. Bei einem Kamerasystem mit mehreren Kameras 2a, 2b ist es dabei möglich, dass bei bekannter Lage der Kameras 2a, 2b zueinander die relative Orientierung des Lageindikators 4 gegenüber dem Kamerasystem basierend auf einem Abstand zwischen den durch die Kameras 2a, 2b erfassten Indikatoren auf der Indikatoroberfläche 8 ermittelt wird. Optional kann dabei auch ein Winkel α zwischen zweier auf die Linse 7 gerichteter Sichtstrahlen der beiden Kameras 2a, 2b errechnet werden und basierend auf diesen Informationen beispielsweise ein Abstand zwischen dem Kamerasystem 2 und dem optischen Lageindikator 4 errechnet werden.

Figur 3 zeigt einen erfindungsgemäßen optischen Lageindikator 4.

Der optische Lageindikator 4 umfasst dabei eine Lasereinheit 12, welche dazu angeordnet ist, um einen Laserstrahl auf ein diffraktives optisches Element 13 zu projizieren. Durch das diffraktive optische Element 13 wird auf einer der Lasereinheit 12 abgewandten Seite des diffraktiven optischen Elements 13 ein Muster 14 abgestrahlt, welches bestimmte optischen Eigenschaften aufweist. So ist dieses Muster 14 bei einer Betrachtung des diffraktiven optischen Elements 13 durch die Kameras 2a, 2b unabhängig von einer transversalen Verschiebung des Kamerasystems 2 gegenüber dem optischen Lageindikator 4. In Figur 3 ist dabei die erste Kamera 2a in zwei unterschiedlichen Positionen dargestellt. So ist die erste Kamera 2a' in einer ersten Position und die erste Kamera 2a" in einer zweiten Position dargestellt.

Die erste Kamera 2a" ist in der zweiten Position in Figur 3 rechts dargestellt und ein von der ersten Kamera 2a" in der zweiten Position erfasstes Bild 5' ist dazu abgebildet. In dem Bild der ersten Kamera 2a" in der zweiten Position wird ein gleichmäßiges Punktemuster abgebildet, welches auf einer Oberfläche des diffraktiven optischen Elements 13 aus Sicht der ersten Kamera 2a dargestellt wird. Unabhängig davon, ob die erste Kamera 2a nach links oder rechts verschoben wird, wird das gleiche Punktemuster mit gleichen Abständen der einzelnen Punkte zueinander dargestellt. Das dargestellte Muster 14 ist somit unabhängig von einer transversalen Verschiebung der ersten Kamera 2a gegenüber dem optischen Lageindikator 4. Die von dem diffraktiven optischen Element 13 abgebildeten Punkte können optisch so beschrieben werden, als ob diese in der Unendlichkeit liegen würden. In einem einfachen Beispiel kann dies so verstanden werden, dass beispielsweise eine Abbildung eines Sternbildes am Himmel sich nicht verändert, wenn eine Kamera auf der Erde bewegt wird. Dieser optische Effekt wird durch die Lasereinheit 2 mit dem diffraktiven optischen Element 13 simuliert.

Wird die erste Kamera 2a jedoch in ihrer Orientierung gegenüber dem optischen Lageindikator 4 geschwenkt, wie dies beispielsweise in Figur 3a links dargestellt ist, so kommt es zu einer Veränderung des von der ersten Kamera 2a erfassten Musters 13. Insbesondere werden die einzelnen Punkte des auf dem optischen diffraktiven optischen Element 13 abgebildeten Musters in der Ebene näher zueinander wandern, in der die Kamera 2a geschwenkt wurde. Es kann also aus dem erfassten Muster 14 und den Abständen zwischen einzelnen Punkten des Musters 14 auf eine Orientierung der ersten Kamera 2a gegenüber dem Lageindikator 4 geschlossen werden. Dies gilt in entsprechender Weise auch für eine zweite Kamera 2b des Kamerasystems 2.

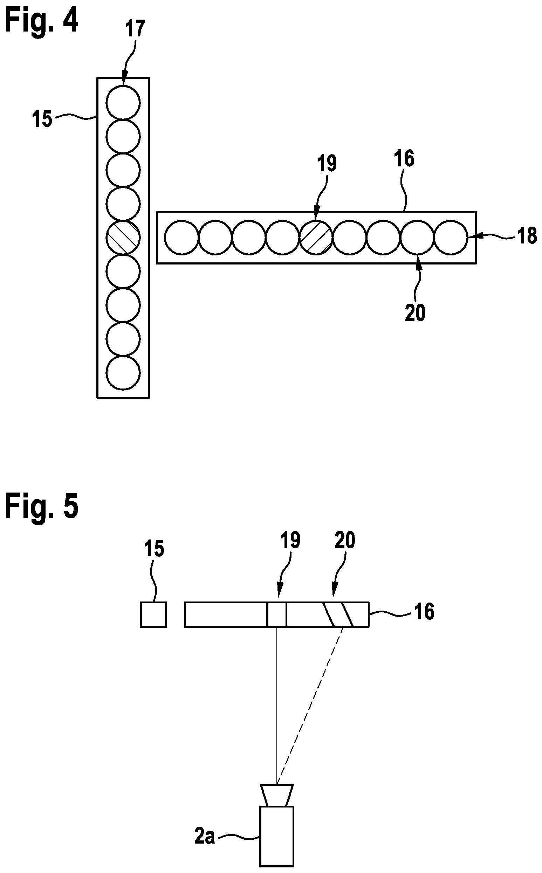

Die Figuren 4 und 5 zeigen einen weiteren beispielhaften optischen Lageindikator 4, welcher im Kalibrierkörper zusätzlich zu dem in Figur 3 gezeigten Lageindikator angebracht sein kann. Der Lageindikator 4 weist dabei zwei in einem Winkel zueinander stehende optische Winkelanzeigen 15, 16 auf. So ist in Figur 4 ein eine erste optische Winkelanzeige 15 dargestellt, welche senkrecht zu einer zweiten optischen Winkelanzeige 16 steht. Jede der Winkelanzeigen 15, 16, ist dazu eingerichtet, jeweils einen Winkel einer Verkippung des optische Lageindikators 4 gegenüber dem Kamerasystem 2 in einer zugehörigen Ebene zu beschreiben und dem Kamerasystem 2 das Erfassen der relativen Orientierung durch ein Ablesen der beiden Winkel zu ermöglichen.

Es wird durch die erste optische Winkelanzeige 15 ein vertikaler Winkel angezeigt, in dem die erste optische Winkelanzeige 15 gegenüber der ersten Kamera 2a verkippt ist. wird. In entsprechender Weise wird durch die zweite optische Winkelanzeige 16 ein horizontaler Winkel beschrieben, in dem die zweite optische Winkelanzeige 16 gegenüber der ersten Kamera 2a verkippt ist. Dazu weist jede der optischen Winkelanzeigen 15, 16 mehrere Indikatoren 17, 18 auf. So weist die erste optische Winkelanzeige 15 eine Reihe erster Indikatoren 17 und die zweite optische Winkelanzeige 16 eine Reihe zweiter Indikatoren 18 auf, welche entlang einer Ausrichtung der jeweiligen Winkelanzeige 15, 16 aufgereiht sind. Jeder der Indikatoren 17, 18 ist mit einer Blende ausgerüstet, die dazu führt, dass der jeweilige Indikator nur aus einer einzelnen Blickrichtung oder einem beschränkten Blickwinkelbereich sichtbar ist. So ist beispielsweise bei einer Betrachtung der optischen Winkelanzeigen 15, 16 nur einer der optischen Indikatoren 17, 18 sichtbar und die anderen der optischen Indikatoren sind durch die Blenden verdeckt. Da die Blenden in unterschiedlichen Richtungen ausgerichtet sind, wird somit durch den sichtbaren Indikator der Indikatoren 17, 18 der Winkel beschrieben, in dem die optischen Winkelanzeige 15, 16 gegenüber dem Kamerasystem 2 verkippt ist. Dies ist beispielhaft auch in Figur 5 dargestellt. Ist die erste Kamera 2a beispielsweise zentral vor der zweiten optischen Winkelanzeige 16 angeordnet, so ist ein zentraler Indikator 19 der Indikatoren 18 der zweiten optischen Winkelanzeige 16 für die erste Kamera 2a sichtbar. Gleichzeitig ist ein anderer dezentraler Indikator 20 der zweiten optischen Winkelanzeige 16 aus Sicht der ersten Kamera 2a verdeckt. Dieser würde erst dann für die erste Kamera 2a sichtbar werden, wenn der Lageindikator 4 um einen dem dezentralen Indikator 20 zugehörigen Winkel gegenüber der ersten Kamera 2a verkippt wird.

Es wird den Kameras 2a, 2b des Kamerasystems 2 somit eine relative Orientierung der jeweiligen Kamera 2a, 2b gegenüber dem optischen Lageindikator 4 angezeigt. Dabei wird beispielsweise ein vertikaler Winkel eines auf den Lageindikator 4 fallenden Sichtstrahls durch die erste optische Winkelanzeige 15 angezeigt und ein horizontaler Winkel eines auf den Lageindikator 4 fallenden Sichtstrahls durch die zweite optische Winkelanzeige 16 angezeigt.

Es wird darauf hingewiesen, dass jeder der zuvor ausgeführten Lageindikatoren 4 optional ein dreidimensionales Erfassen der Orientierung ermöglicht. So ist beispielsweise in Figur 2 die Indikatoroberfläche 8 lediglich zum Ablesen einer horizontalen Orientierung des Kamerasystems 2 gegenüber dem optischen Lageindikator 4 beschrieben. Diese weist jedoch bevorzugt zwei Dimensionen auf, was daraus zu verstehen ist, dass der optische Indikator 11 auf eine Indikatoroberfläche 8 angeordnet ist. Es kann somit eine relative Orientierung der ersten Kamera 2a und der zweiten Kamera 2b sowohl in horizontaler als auch in vertikaler Richtung abgelesen werden. In entsprechender Weise kann auch bei dem in Figur 3 beschriebenen Lageindikator 4 auch eine Verkippung der ersten Kamera 2a sowohl in horizontaler als auch in vertikaler Richtung erfasst werden. Der optische Lageindikator 4 ist dabei allgemein dazu geeignet, die relative Orientierung des optischen Lageindikators 4 in zumindest zwei Winkeln gegenüber dem Kalibrierkörper 1 anzuzeigen.

Die zuvor beschriebenen Ausführungsformen bezüglich des optischen Lageindikators 4 sind grundsätzlich als Alternativen zu verstehen. Es ist jedoch auch vorteilhaft, wenn zwei oder drei der zuvor beschriebenen optischen Lageindikatoren an dem Kalibrierkörper 1 angeordnet sind. Auf diese Weise kann eine Fehlersicherheit erhöht werden, da unterschiedliche Verfahren zum Ablesen der Orientierung des optischen Lageindikators 4 bereitgestellt werden.

Neben dem Kalibrierkörper 1 ist auch ein Kalibriersystem vorteilhaft, welches den Kalibrierkörper 1 umfasst und zudem das Kamerasystem 2 umfasst. Das Kalibriersystem umfasst dabei eine mit dem Kamerasystem 2 gekoppelte Recheneinheit 30, welche dazu eingerichtet ist, ein von dem Kamerasystem 2 erfasstes Bild oder mehrere von unterschiedlichen Kameras 2a, 2b des Kamerasystems 2 erfasste Bilder des Kalibrierkörpers 1 zu empfangen. Diese Bilder werden einer Bildanalyse unterzogen, um eine Orientierung des Kalibrierkörpers 1 gegenüber dem Kamerasystems 2 basierend auf dem in dem Bild erfassten optischen Lageindikator 4 des Kalibrierkörpers 1 zu ermitteln.

Die Recheneinheit ist dazu eingerichtet, eine Kalibrierung extrinsischer und/oder intrinsischer Parameter der Kameras 2a, 2b des Kamerasystems 2 basierend auf dem in dem Bild dargestellten optischen Kalibrierelement 3 und der ermittelten relativen Orientierung auszuführen. Dabei wird bevorzugt ein Normalenvektor ermittelt, welcher die Orientierung des optischen Lageindikators 4 gegenüber dem Kamerasystem 2 beschreibt. Dieser wird für eine Kalibrierung der Kameras 2a, 2b des Kamerasystems 2 bereitgestellt und bei einer mittels des optischen Kalibrierelements 3 ausgeführten Kalibrierung genutzt.

Die Erfindung führt somit zu einer Verbesserung neuer oder bestehender Kalibrierkörper und der zugehörigen Kalibrierverfahren und Algorithmen bezogen auf Genauigkeit, Robustheit und Zeitbedarf.

Umfasst der optische Lageindikator 4 eine inverse Kamera oder eine Lasereinheit mit diffraktivem optischen Element, so erlaubt dies die Bestimmung der drei Raumwinkel des Kalibrierkörpers 1 relativ zu einer Kamera des Kamerasystems 2, bezogen auf das optische Kalibrierelement, wie z.B. einen planaren Kalibrierkörper, wie z.B. einem Checkerboard. Damit können diese als Normalenvektor 6 der Ebene sowie der Rotation um diesen Vektor (also in der Ebene) interpretiert werden.

Eine Schätzung des Normalenvektors 6 ist bei herkömmlichen Kalibrierkörpern typischerweise schlecht konditioniert, da sie perspektivische Effekte (also bspw. die Verkleinerung von Schachbrettecken aufgrund größerer Distanz) erfordert. Dies führt während der Schätzung dazu, dass Kamerakalibrierparameter und die geschätzten Parameter der Kalibrierkörperposen oft stark verkoppelt sind. Das heißt, dass eine Änderung der Kamerakalibrierparameter durch eine Änderung der Kalibrierkörperposenparameter kompensiert werden kann, ohne dass dadurch größere messbare Fehler/Residuen entstehen. Damit ist die Kalibrierung unsicher und im konkreten Kalibrierfall ungenau. Dies kann durch Hinzunahme weitere Kalibrieraufnahmen unterbunden werden. Erfindungsgemäß können weitere/andere Beobachtungen, wie die hier beschriebene Orientierung, dazu genommen werden. Diese kann die Kalibrierung deutlich stabilisieren. Als Konsequenz sind weniger Kalibrieraufnahmen ausreichend, bzw. die resultierenden Kalibrierparameter genauer.

Auch die Erkennung von Fehlern während des Kalibriervorgangs wird damit vereinfacht. Ausschlaggebend ist, dass der optische Lageindikator 4 ein sehr genaues Ermitteln der Orientierung (bspw. im Bereich unter einem Grad) erlaubt, so dass die so bestimmte Orientierung als Ground-Truth angenommen werden kann. Damit müssten nur noch die drei Parameter der Position des Kalibrierkörpers bestimmt werden. Da die Anzahl der Parameter während einer Kalibrierung typischerweise durch die Kalibrierkörperposenparameter dominiert wird, ließe sich die Anzahl der zu bestimmenden Parameter damit nahezu halbieren.

Zudem lässt sich optional auch der Winkel zwischen den Sichtstrahlen zweier Kameras bestimmen und so mit nur einer Aufnahme und ohne das angefügt Checkerboard die relative Orientierung zwischen den Kameras direkt bestimmen.

Ein weiterer Vorteil eines Kalibrierens mittels des erfindungsgemäßen Kalibrierkörpers liegt darin, dass der Bildbereich in dem der Kalibrierkörper zu sehen ist typischerweise klein ist, während die klassische Schätzung der Orientierung eines Kalibrierkörpers einen größeren Bildbereich und damit eine bereits ausreichend genaue intrinsische Kalibrierung erfordert.

Es erfolgt somit eine Umsetzung eines Systems zur optischen Orientierungsschätzung in neue oder bestehende Kalibrierkörper sowie ein Integrieren des Kalibrierprozesses in eine Software. Der optische Lageindikator 4 nimmt dabei bevorzugt nur einen kleinen Teil des Kalibrierkörpers 1 ein, sodass dieser nahezu oder vollständig in seiner Funktion erhalten bleibt.

Für die korrekte Funktion muss die Orientierung und evtl. Position (im Falle der inversen Kamera) zwischen dem Orientierungssystem und dem Kalibrierkörper 1 einmalig bestimmt werden, falls diese nicht durch bauliche Maßnahmen festgelegt werden kann.

Zwei vorgeschlagenen Ausführungsformen (inverse Kamera und Lasereinheit mit diffraktivem optischen Element) setzen voraus, dass der Kalibrierkörper 1 eine Mindestgröße (im Bild) aufweist, so dass bspw. mehrere projizierte Punkte sichtbar sind. Alternativ dazu könnte auch ein optischer Lageindikator 4 nach dem Prinzip der inversen Kamera aufgebaut werden, der nur eine Farbkodierung nutzt. Dabei würde bspw. eine farbkodierte Folie (jede Farbe sollte eindeutig sein) hintergrundbeleuchtet und hinter einer Linse verbaut. Die zu sehende Farbe würde dann als Indikator direkt Rückschlüsse auf den Normalenvektor 6 zulassen. Eine Bestimmung der Rotation um den Sichtstrahl wäre damit nicht möglich. Eine solche Apparatur könnte aber kleiner gebaut werden und hätte geringere Anforderungen an die Betrachtungsschärfe. Für den Farbabgleich könnten um die Optik herum ebenfalls hintergrundbeleuchtete Referenzfarben gezeigt werden.

Neben der obigen schriftlichen Offenbarung wird explizit auf die Offenbarung der Figuren 1 bis 5 verwiesen.

## Patentansprüche

1. Kalibrierkörper (1) zum Kalibrieren eines Kamerasystems (2), umfassend:
- ein optisches Kalibrierelement (3), welches für eine Kalibrierung extrinsischer und/oder intrinsischer Parameter des Kamerasystems (2) geeignet ist, und
- einen optischen Lageindikator (4), welcher für ein Erfassen einer Orientierung des optischen Lageindikators (4) gegenüber dem Kamerasystem (2) durch das Kamerasystem (2) geeignet ist,
- wobei das optische Kalibrierelement (3) in einer vordefinierten relativen Lage gegenüber dem optischen Lageindikator (4) angeordnet ist,
**dadurch gekennzeichnet, dass** der optische Lageindikator (4) eine Lasereinheit (12) mit einem diffraktiven optischem Element (13) umfasst, welche ausgebildet ist, ein Muster unabhängig von einer transversalen Verschiebung des Kamerasystems (2) gegenüber dem optischen Lageindikator (4) darzustellen.

2. Kalibrierkörper (1) gemäß Anspruch 1, **dadurch gekennzeichnet, dass** der optische Lageindikator (4) eine inverse Kamera umfasst, welche dem Kamerasystem (2) das Erfassen der relativen Orientierung durch ein Ablesen eines orientierungsabhängig ablesbaren Indikators ermöglicht.

3. Kalibrierkörper (1) gemäß Anspruch 2, **dadurch gekennzeichnet, dass** die inverse Kamera eine erste Ebene (9) und eine zweite Ebene (10) aufweist, wobei die erste Ebene (9) einen Betrachtungspunkt (11) der zweiten Ebene (10) aus Sicht des Kamerasystems (2) definiert, und ein auf dem Betrachtungspunkt in der zweiten Ebene (10) gelegener Indikator die relative Orientierung des optischen Lageindikators (4) gegenüber dem Kamerasystem (2) beschreibt.

4. Kalibrierkörper (1) gemäß einem der voranstehenden Ansprüche, **dadurch gekennzeichnet, dass** der optische Lageindikator (4) zwei in einem Winkel zueinander stehende optische Winkelanzeigen (15, 16) umfasst, welche jeweils einen Winkel einer Verkippung des optische Lageindikator (4) gegenüber dem Kamerasystem in einer zugehörigen Ebene beschreiben und dem Kamerasystem (2) das Erfassen der relativen Orientierung durch ein Ablesen der beiden Winkel ermöglicht.

5. Kalibrierkörper (1) gemäß einem der voranstehenden Ansprüche, **dadurch gekennzeichnet, dass** das optisches Kalibrierelement (3) ein Muster auf einer planaren Oberfläche aufweist.

6. Kalibrierkörper (1) gemäß einem der voranstehenden Ansprüche, **dadurch gekennzeichnet, dass** das optische Kalibrierelement (3) und der optische Lageindikator (4) in einer gemeinsamen Ebene angeordnet sind.

7. Kalibriersystem, umfassend den Kalibrierkörper (1) gemäß einem der voranstehenden Ansprüche und das Kamerasystem (2), wobei das Kalibriersystem ferner eine mit dem Kamerasystem (2) gekoppelte Recheneinheit umfasst, welche dazu eingerichtet ist:
- ein von dem Kamerasystem (2) erfasstes Bild des Kalibrierkörpers (1) zu empfangen,
- eine relative Orientierung des optischen Lageindikators (4) gegenüber dem Kamerasystem (2) basierend auf dem in dem Bild erfassten Lageindikator (4) zu ermitteln, und
- eine Kalibrierung extrinsischer und/oder intrinsischer Parameter des Kamerasystems basierend auf dem in dem Bild dargestellten optischen Kalibrierelement (3) und der ermittelten relativen Orientierung des optischen Lageindikators (4) gegenüber dem Kamerasystem (2) Lage auszuführen.

8. Kalibriersystem gemäß Anspruch 7, **dadurch gekennzeichnet, dass** die Kalibrierung extrinsischer und/oder intrinsischer Parameter des Kamerasystems (2) basierend auf der ermittelten relative Position und/oder Orientierung des optischen Lageindikators (4) gegenüber dem Kamerasystem (2) erfolgt, wobei basierend auf der ermittelten relative Position und/oder Orientierung des optischen Lageindikators (4) gegenüber dem Kamerasystem (2) ein senkrecht zu dem optischen Kalibrierelement (3) stehender Normalenvektor ermittelt wird.

9. Verwenden eines Kalibrierkörpers (1) gemäß einem der Ansprüche 1 bis 6 für eine Kalibrierung extrinsischer und/oder intrinsischer Parameter eines Kamerasystems (2), wobei eine relative Orientierung des optischen Lageindikators (4) gegenüber dem Kamerasystem (2) basierend auf dem in dem Bild erfassten Lageindikator (4) ermittelt wird, und eine Kalibrierung der extrinsischen und/oder intrinsischen Parameter des Kamerasystems (2) basierend auf dem optischen Kalibrierelement (3) und der ermittelten relativen Orientierung des optischen Lageindikators (4) gegenüber dem Kamerasystem (2) ausgeführt wird.

## Claims

1. Calibration body (1) for calibrating a camera system (2), comprising:
- an optical calibration element (3), which is suitable for a calibration of extrinsic and/or intrinsic parameters of the camera system (2), and
- an optical position indicator (4), which is suitable for sensing an orientation of the optical position indicator (4) with respect to the camera system (2) by the camera system (2),
- wherein the optical calibration element (3) is arranged in a predefined relative position with respect to the optical position indicator (4),
**characterized in that** the optical position indicator (4) comprises a laser unit (12), which has a diffractive optical element (13) and is designed to display a pattern independently of a transversal displacement of the camera system (2) with respect to the optical position indicator (4).

2. Calibration body (1) according to Claim 1, **characterized in that** the optical position indicator (4) comprises an inverted camera, which enables the camera system (2) to sense the relative orientation by reading an orientation-dependently readable indicator.

3. Calibration body (1) according to Claim 2, **characterized in that** inverted camera has a first plane (9) and a second plane (10), wherein the first plane (9) defines a viewing point (11) of the second plane (10) from the viewpoint of the camera system (2), and an indicator situated at the viewing point in the second plane (10) describes the relative orientation of the optical position indicator (4) with respect to the camera system (2).

4. Calibration body (1) according to one of the preceding claims, **characterized in that** the optical position indicator (4) comprises two optical angle displays (15, 16), which are at an angle to one another, each describe an angle of a tilting of the optical position indicator (4) with respect to the camera system in an associated plane and enable the camera system (2) to sense the relative orientation by reading the two angles.

5. Calibration body (1) according to one of the preceding claims, **characterized in that** the optical calibration element (3) has a pattern on a planar surface.

6. Calibration body (1) according to one of the preceding claims, **characterized in that** the optical calibration element (3) and the optical position indicator (4) are arranged in a common plane.

7. Calibration system, comprising the calibration body (1) according to one of the preceding claims and the camera system (2), wherein the calibration system also comprises a computing unit which is coupled to the camera system (2) and is designed:
- to receive an image of the calibration body (1) sensed by the camera system (2),
- to determine a relative orientation of the optical position indicator (4) with respect to the camera system (2) on the basis of the position indicator (4) sensed in the image, and
- to perform a calibration of extrinsic and/or intrinsic parameters of the camera system on the basis of the optical calibration element (3) represented in the image and the determined relative orientation of the optical position indicator (4) with respect to the camera system (2).

8. Calibration system according to Claim 7, **characterized in that** the calibration of extrinsic and/or intrinsic parameters of the camera system (2) takes place on the basis of the determined relative position and/or orientation of the optical position indicator (4) with respect to the camera system (2), wherein a normal vector perpendicular to the optical calibration element (3) is determined on the basis of the determined relative position and/or orientation of the optical position indicator (4) with respect to the camera system (2).

9. Using a calibration body (1) according to one of Claims 1 to 6 for a calibration of extrinsic and/or intrinsic parameters of a camera system (2), wherein a relative orientation of the optical position indicator (4) with respect to the camera system (2) is determined on the basis of the position indicator (4) sensed in the image, and a calibration of the extrinsic and/or intrinsic parameters of the camera system (2) is performed on the basis of the optical calibration element (3) and the determined relative orientation of the optical position indicator (4) with respect to the camera system (2).

## Revendications

1. Corps d'étalonnage (1) pour étalonner un système de caméra (2), comprenant :
- un élément d'étalonnage optique (3), qui est approprié pour un étalonnage de paramètres extrinsèques et/ou intrinsèques du système de caméra (2), et
- un indicateur de position optique (4), qui est approprié pour la détection d'une orientation de l'indicateur de position optique (4) par rapport au système de caméra (2) par le système de caméra (2),
- l'élément d'étalonnage optique (3) étant agencé dans une position relative prédéfinie par rapport à l'indicateur de position optique (4),
- **caractérisé en ce que** l'indicateur de position optique (4) comprend une unité laser (12) dotée d'un élément optique diffractant (13), laquelle est conçue pour représenter un motif indépendamment d'un déplacement transversal du système de caméra (2) par rapport à l'indicateur de position optique (4).

2. Corps d'étalonnage (1) selon la revendication 1, **caractérisé en ce que** l'indicateur de position optique (4) comprend une caméra inverse, laquelle permet au système de caméra (2) de détecter l'orientation relative par lecture d'un indicateur lisible en fonction de l'orientation.

3. Corps d'étalonnage (1) selon la revendication 2, **caractérisé en ce que** la caméra inverse présente un premier plan (9) et un second plan (10), le premier plan (9) définissant un point de vue (11) du second plan (10) depuis le système de caméra (2), et un indicateur situé au point de vue dans le second plan (10) décrivant l'orientation relative de l'indicateur de position optique (4) par rapport au système de caméra (2).

4. Corps d'étalonnage (1) selon l'une quelconque des revendications précédentes, **caractérisé en ce que** l'indicateur de position optique (4) comprend deux affichages d'angle optiques (15, 16) positionnés selon un certain angle l'un par rapport à l'autre, lesquels décrivent respectivement un angle d'inclinaison de l'indicateur de position optique (4) par rapport au système de caméra à un plan associé et permettent au système de caméra (2) de détecter l'orientation relative par une lecture des deux angles.

5. Corps d'étalonnage (1) selon l'une quelconque des revendications précédentes, **caractérisé en ce que** l'élément d'étalonnage optique (3) présente un motif sur une surface plane.

6. Corps d'étalonnage (1) selon l'une quelconque des revendications précédentes, **caractérisé en ce que** l'élément d'étalonnage optique (3) et l'indicateur de position optique (4) sont agencés dans un plan commun.

7. Système d'étalonnage, comprenant le corps d'étalonnage (1) selon l'une quelconque des revendications précédentes et le système de caméra (2), le système d'étalonnage comprenant en outre une unité de calcul couplée au système de caméra (2), laquelle est conçue pour :
- recevoir une image du corps d'étalonnage (1) détectée par le système de caméra (2),
- déterminer une orientation relative de l'indicateur de position optique (4) par rapport au système de caméra (2) sur la base de l'indicateur de position (4) détecté dans l'image, et
- réaliser un étalonnage de paramètres extrinsèques et/ou intrinsèques du système de caméra sur la base de l'élément d'étalonnage optique (3) représenté dans l'image et de l'orientation relative déterminée de l'indicateur de position optique (4) par rapport au système de caméra (2).

8. Système d'étalonnage selon la revendication 7, **caractérisé en ce que** l'étalonnage de paramètres extrinsèques et/ou intrinsèques du système de caméra (2) est effectué sur la base de la position relative et/ou de l'orientation déterminées de l'indicateur de position optique (4) par rapport au système de caméra (2), un vecteur normal perpendiculaire à l'élément d'étalonnage optique (3) étant déterminé sur la base de la position relative et/ou de l'orientation déterminées de l'indicateur de position optique (4) par rapport au système de caméra (2).

9. Utilisation d'un corps d'étalonnage (1) selon l'une quelconque des revendications 1 à 6 pour un étalonnage de paramètres extrinsèques et/ou intrinsèques d'un système de caméra (2), une orientation relative de l'indicateur de position optique (4) par rapport au système de caméra (2) étant déterminée sur la base de l'indicateur de position (4) détecté dans l'image, et un étalonnage des paramètres extrinsèques et/ou intrinsèques du système de caméra (2) étant réalisé sur la base de l'élément d'étalonnage optique (3) et de l'orientation relative déterminée de l'indicateur de position optique (4) par rapport au système de caméra (2).
